# EUROPÄISCHE PATENTSCHRIFT

(11) **EP 1 006 235 B1**
(45) Veröffentlichungstag und Bekanntmachung des Hinweises auf die Patenterteilung: **13.02.2008**
(21) Anmeldenummer: 99117308.9
(22) Anmeldetag: 03.09.1999
(51) Int. Cl.: D21G 1/02

(54) **Wälzlager**
Rollerbearing
Palier pour rouleau

(30) Priorität: 25.11.1998 DE 19854339
(43) Veröffentlichungstag der Anmeldung: 07.06.2000
(73) Patentinhaber: Andritz Küsters GmbH & Co. KG, 47805 Krefeld (DE)
(72) Erfinder: Küsters, Karl-Heinz, 47804 Krefeld (DE)
(74) Vertreter: Kluin, Jörg-Eden

(56) Entgegenhaltungen:
- DE-A- 3 003 396
- DE-A- 3 621 979
- DE-A- 19 603 651
- DE-U- 9 105 073

## Beschreibung

Die Erfindung bezieht sich auf eine Walze der dem Oberbegriff des Anspruchs 1 entsprechenden Art.

Der gattungsgemäße Walzentyp umfaßt die üblichen Walzenarten, sei es durchbiegungssteuerbare Walzen mit einer um ein undrehbare Querhaupt umlaufenden Hohlwalze, sei es die sogenannten konventionellen Walzen mit einem zylindrischen Walzenkörper mit Walzenzapfen. Bei allen diesen Walzen können Betriebszustände auftreten, in denen die Wälzlager keine nennenswerten radialen Kräfte erfahren. Die Wälzkörper der Wälzlager erfahren dann auch keine Anlagekraft an den benachbarten Abrollflächen des Wälzlagers, so daß keine Reibung zustande kommen kann, die im Normalbetrieb zur rollenden Mitnahme der Wälzkörper führt. Die Abrollflächen schleifen an den Wälzkörpern entlang, was ein äußerst ungünstiger Betriebszustand ist, weil er zu starkem Verschleiß und baldiger Zerstörung der Wälzlager Anlaß ist.

Ein Beispiel für einen derartigen unerwünschten Betriebszustand ist gegeben, wenn die in Rede stehende gattungsgemäße Walze Belastungswalze, d.h. oberste Walze eines Kalanderstapels ist und über die Wälzlager gerade keine zusätzlichen Belastungskräfte aufgebracht werden sollen. Bei einem Kalanderstapel mit einer konventionellen oberen Belastungswalze ist der Fall gegeben, wenn die Unterwalze den Kalanderstapel gerade mit einer solchen Kraft hoch drückt, die dem Gewicht der oberen Belastungswalze entspricht. Diese rollt dann kräftefrei mit - was die über die Wälzlager aufbringbaren Kräfte betrifft. Ein solcher Fall ist nicht selten, da die Ausübung großer Linienkräfte je nach Behandlungszweck der Papier- oder sonstigen Bahn nicht immer angestrebt wird.

Aus der DE 91 05 073 U1 ist eine durchbiegungssteuerbare Walze bekannt, deren Walzenmantel mit Hilfe von Pendelrollenlagern auf einer gegenüber einem Träger in Pressrichtung radial beweglichen Führungsvorrichtung, d.h. mittelbar an dem Träger gelagert ist. Um die Biegelinien der durchbiegungssteuerbaren Walze und der anderen den Walzenspalt begrenzenden Gegenwalze optimal aneinander anpassen zu können, sind an den Enden des Walzenmantels unmittelbar neben den Pendelrollenlagern zusätzliche Stützelemente zur Erzeugung eines Drehmoments in der Achse senkrecht zur Pressebene vorgesehen.

Aus der DE 196 03 651 A1 ist ebenfalls eine durchbiegungssteuerbare Walze bekannt, deren Walzenmantel über Wälzlager auf einem Träger gelagert ist. Unmittelbar neben dem Wälzlager ist eine Kraftausübungseinrichtung in Form zusätzlicher Stützelemente vorgesehen, die zwischen dem Walzenmantel und dem Träger in der Wirkebene wirken. Mittels dieser zusätzlichen Stützelemente soll der Walzenmantel insbesondere auch an den beiden Enden optimal an die jeweiligen Betriebsbedingungen anpassbar sein. Die zusätzlichen Stützelemente bewirken eine Beeinflussung der Linienkraft im Walzenspalt.

Die DE 36 21 979 A1 betrifft ein Verfahren zum Außenrundschleifen von schwimmenden Walzen. Zur Erhöhung der Schleifgenauigkeit, insbesondere durch Ausgleich des absoluten Rundlauffehlers der Wälzlager, sieht das Verfahren unter anderem vor, unmittelbar neben dem Wälzlager eine Kraftausübungseinrichtung vorzusehen, die zwischen dem Walzenkörper und dem Walzenständer wirkt. Die resultierende Kraft der Kraftausübungseinrichtung verläuft nicht in der Wirkebene der Walze.

Aus der DE 30 03 396 A1 ist eine Walze bekannt, deren Walzenmantel über Wälzlager auf einem Träger gelagert ist. In Achsrichtung beabstandet von dem Wälzlager ist eine Kraftausübungseinrichtung vorgesehen, die der Beeinflussung der Liniendruckverteilung an den Walzenenden dient.

Der Erfindung liegt die Aufgabe zugrunde, unerwünschte Betriebszustände, bei denen keine ordnungsgemäße rollende Mitnahme der Wälzköper erfolgt, zu vermeiden.

Diese Aufgabe wird in ihrem allgemeinsten Aspekt durch die in Anspruch 1 wiedergegebene Erfindung gelöst.

Es ist hierdurch erreicht, dass durch die Betätigung der Kraftausübungseinrichtung auf die Wälzlager gewissermaßen künstlich eine gesonderte Wälzkörperbelastung aufgebracht werden kann, die gerade ausreicht, um ein rollendes Mitlaufen der Wälzkörper zu gewährleisten. Diese Wälzkörperbelastung kann nicht durch eine Änderung der Walzenbelastung erzeugt werden, da dann die Linienkraft im Walzspalt beeinflusst würde bzw. die dafür notwendige Linienkraftänderung nicht als Linienkraft im Betrieb genutzt werden könnte. Es würde also ein Linienkraftbereich, der nicht einmal besonders eng ist, von der Nutzung für den Walzvorgang ausgeschlossen. Diese Einschränkung wird durch die erfindungsgemäße Ausgestaltung vermieden.

Um dem Verlust des Reibungsschlusses zwischen den Wälzkörpern und den Abrollflächen der Wälzlagerringe entgegenzuwirken, ist es aus dem DE-GBM 1 955 238 und der DE-PS 932 942 bekannt, in den Rollen bzw. den Abrollflächen in Nuten angeordnete elastische Ringe anzuordnen. Diese Lösung geht jedoch einen ganz anderen Weg, der wegen der Nuten und der durch deren Begrenzungen gegebene Kanten für Wälzlager, die auch sehr hohe radiale Lasten übertragen können müssen, nicht vorteilhaft ist.

Die Anbringung einer Kraftausübungseinrichtung neben dem Wälzlager einer durchbiegungssteuerbaren Walze ist für sich genommen aus der DE 30 03 396 C2 bekannt. Hierbei geht es aber um eine andere Zielsetzung, nämlich um eine Beeinflussung der Biegelinie der Hohlwalze der durchbiegungssteuerbaren Walze. Zur Erzeugung eines ausreichenden Biegemoments bedarf es eines entsprechenden Momentenarms, d.h. die Kraftausübungseinrichtung muß funktionsnotwendig in einem gewissen axialen Abstand von dem das Widerlager bildenden Wälzlager angeordnet sein, wenn bei praktikabler Bemessung der Kraftausübungseinrichtung eine merkliche Wirkung vorhanden sein soll. Im Gegensatz dazu ist die Kraftausübungseinrichtung bei der Erfindung unmittelbar neben dem Wälzlager vorgesehen.

Die Ansprüche 2 und 3 geben bevorzugte Ausführungsbeispiele der Erfindung wieder, nämlich Anspruch 2 eine durchbiegungssteuerbare Walze, Anspruch 3 eine konventionelle Walze.

Um das Schleifen der Wälzkörper zu unterbinden, kommt es nicht darauf an, in welche Richtung die Kraftausübungseinrichtung - in einer zur Walzenachse senkrechten Ebene gesehen - wirkt. Wenn nur an einer Stelle eine ausreichende Anlage gewährleistet ist, wird der dortige Wälzkörper ordnungsgemäß mitgenommen und vermittelt dies über den Käfig auch den anderen Wälzkörpern. Dennoch ist es bevorzugt, wenn die resultierende Kraft der Kraftausübungseinrichtung in der Wirkebene gelegen ist. Ferner ist gemäß Anspruch 4 die Kraftausübungseinrichtung bei der bevorzugten Ausführungsform hydraulisch betätigt und weist gemäß Anspruch 5 insbesondere ein radial gegen eine umlaufende Zylinderfläche der Hohlwalze oder des Querhaupts wirkendes hydrostatisches Stützelement auf, wie es für sich genommen von den durch biegungssteuerbaren Walzen zum Beispiel aus der DE 22 30 139 bekannt ist.

Bei einer konventionellen Walze kann das Stützelement gemäß Anspruch 6 am Innenumfang eines mit dem Walzenständer verbundenen, den Walzenzapfen umgebenden Ringgehäuses angeordnet sein und dann gegen eine Zylinderfläche des Walzenzapfens wirken.

Gemäß Anspruch 7 kann die Kraftausübungseinrichtung mindestens ein Paar von zur Wirkebene symmetrisch angeordneten, gleichstarken Stützelementen umfassen, deren resultierende Kraft in der Wirkebene gelegen ist und die noch eine gewisse Zentrierwirkung auf den Walzenzapfen oder die Hohlwalze ausüben.

Obwohl es zur Vermeidung des Schleifens der Wälzkörper auf die Richtung - in einer zur Walzenachse senkrechten Ebene gesehen - der von der Kraftausübungseinrichtung ausgeübten Kraftresultierenden primär nicht ankommt, kann es unter einem zusätzlichen Aspekt vorteilhaft sein, wenn diese resultierende Kraft in Richtung der von der Walze erzeugbaren Linienkraft gelegen ist.

Dann kann nämlich in einem Betriebsfall, in welchem die Ausgangssituation der zu geringen Belastung der Wälzlager nicht gegeben ist, sondern vielmehr gerade im Gegenteil eine hohe Belastung vorliegt, die Anordnung dazu dienen, die Tragfunktion des Wälzlagers zu unterstützen, d.h. einen Teil seiner Belastung zu übernehmen, so daß das Wälzlager bei einer bestimmten hohen Nennbelastung geringer dimensioniert werden kann oder aber eine entsprechend verlängerte Lebensdauer aufweist.

In der Zeichnung sind Ausführungsbeispiele der Erfindung dargestellt.
- Fig. 1: zeigt eine Stirnansicht des oberen Teils eines Kalanders;
- Fig. 2: zeigt eine vergrößerte Wiedergabe des radial inneren Teils des rechten oberen Quadranten der oberen Walze aus Fig. 1;
- Fig. 3: zeigt einen Längsschnitt etwa nach der Linie III-III in Fig. 2;
- Fig. 4: zeigt schematisch das Ende einer andersartigen Walze, an der die Erfindung verwirklicht ist, teilweise im Längsschnitt.

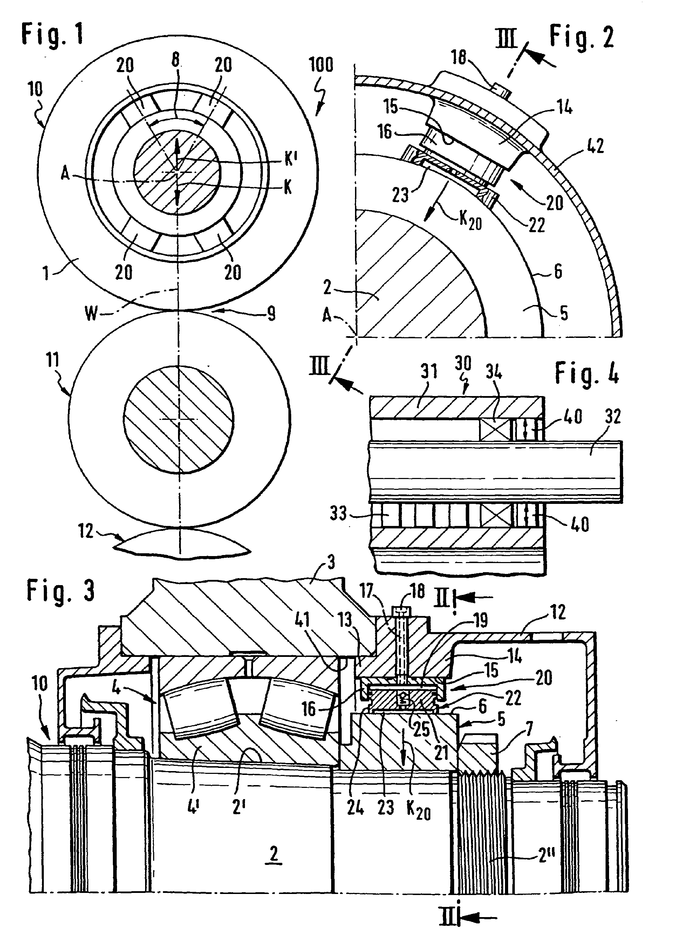

Der in Fig. 1 wiedergegebene als Ganzes mit 100 bezeichnete Kalander umfaßt einen vertikalen Stapel von Walzen 10,11,12, von denen die oberste Walze 10 eine in dem nicht wiedergebenen Walzenständer feststehend gelagerte Belastungswalze konventioneller Bauart ist, die also einen zylindrischen Walzenkörper 1 mit angesetzten koaxialen Walzenzapfen 2 an den Enden umfaßt. Die nicht wiedergegebene Unterwalze des Kalanders 100 ist eine durchbiegungssteuerbare Walze, die den gesamten Walzenstapel trägt und ihn gegen die Belastungswalze 10 hochdrückt.

Die Walze 10 ist mit ihren Zapfen 2 in dem Walzenständer 3 über ein Wälzlager 4 (Fig. 3) gelagert, welches mit seinem Innenring 4' auf einem konischen Abschnitt 2' des Walzenzapfens 2 angeordnet ist. Der Durchmesser des konischen Abschnitts 2' nimmt zum Innern der Walze hin zu. Außenseitig des Wälzlagers 4 ist auf dem Walzenzapfen 2 ein Stützring 5 mit einer zylindrischen Außenumfangsfläche 6 axial verschiebbar, der von einer Ringmutter 7, die auf ein Gewinde 2'' des Walzenzapfens 2 aufschraubbar ist, in Achsrichtung gegen den Innenring 4' des Wälzlagers 4 drückbar ist, so dass der Innenring 4' auf den konischen Abschnitt 2' hinaufgeschoben wird, wodurch das Wälzlager 4 in Achsrichtung befestigt und in seinem radialen Spiel eingestellt und nachgestellt wird.

Der Stützring 5 ist axial unmittelbar neben dem Wälzlager 4 angeordnet, in dem Ausführungsbeispiel außerhalb desselben. Es könnte aber auch ein entsprechender Stützring axial innerhalb des Wälzlagers 4, oder es könnten Stützringe zu beiden Seiten desselben vorgesehen sein.

Gegen die zylindrische Außenumfangsfläche 6 des Stützrings 5 wirken in dem Ausführungsbeispiel der Fig. 1 bis 3 vier hydrostatische Stützelemente 20, die einander bezüglich der Achse A paarweise diametral gegenüberliegen, symmetrisch zur Wirkebene W angeordnet sind und von denen die beiden oberhalb der Achse A und die beiden unterhalb der Achse A vorgesehenen Stützelemente 20 jeweils Winkel 8 von etwa 60° zueinander einnehmen, wie aus Fig. 1 ersichtlich ist. Die resultierende Gesamtkraft K der beiden oberen Stützelemente 20, 20 weist gemäß Fig. 1 nach unten in Richtung auf den Walzspalt 9 zwischen den Walzen 10 und 11, die Resultierende K' der beiden unteren Stützelemente 20, 20 nach oben von dem Walzspalt 9 hinweg.

Die Stützelemente sind in Fig. 1 nur schematisch angedeutet. Ihre Ausbildung im einzelnen geht aus den Fig. 2 und 3 hervor. In die für die Walze 10 bestimmte Öffnung 41 des Walzenständers 3 greift ein den Walzenzapfen 2 umgebendes Ringgehäuse 12 mit einem Bund 13 ein, so dass eine Zentrierung des Ringgehäuses 12 gegenüber dem Walzenständer 3 gegeben ist. An den Stellen der Stützelemente 20 weist das Ringgehäuse 12 radial nach innen vorspringende Ansätze 14 auf, die jeweils eine zu einem durch die Achse A gehenden Radialstrahl senkrechte Stützfläche 15 bilden, an der sich das jeweilige Stützelement 20 radial nach außen abstützt. Jedes Stützelement umfasst ein mit dem Boden gegen die Stützfläche 15 anliegendes Zylinderteil 16, welches durch eine in den Boden eingreifende hohlgebohrte und mit der Bohrung 17 zugleich die Flüssigkeitszuleitung bildende Schraube 18 an dem Ansatz 14 befestigt ist. In die Zylinderkammer 19 des Zylinderteils 16 greift das Kolbenteil 21 eines Gleitschuhs 22 ein, der auf der der Zylinderfläche zugewandten Außenseite der Zylinderfläche 6 entsprechend geformt ist und dort eine ringsum berandete Lagertasche 23 bildet, deren Rand 24 ringsum auf der Zylinderfläche 6 aufliegt. Die Zylinderfläche 6 dreht sich unter dem feststehenden jeweiligen Gleitschuh 22 hinweg, wobei die Kraft unter Vermeidung jeglicher metallischer Reibung im Bereich der Lagertasche 23 durch die darin befindliche Flüssigkeit und im Bereich des Randes 24 durch den dort ständig nach außen abströmenden Film der Flüssigkeit gebildet wird. Über eine mit einem federbelasteten Rückschlagventil versehene Verbindungsbohrung steht die Lagertasche 23 mit der Zylinderkammer 19 in Verbindung. Bei der Zuführung von Druckflüssigkeit über die Schraube 18 füllt sich bei Überschreitung des durch die Federkraft des Rückschlagventils gegebenen Drucks die Lagertasche 23 mit Druckflüssigkeit, so dass auf die Zylinderfläche 6 und damit den Walzenzapfen 2 eine entsprechende Kraft K₂₀ ausgeübt wird.

Die Kraft K₂₀ kann zwei Funktionen ausfüllen. Die erste Funktion besteht darin, im Falle nicht ausreichender Belastung des Wälzlagers 4 eine solche Belastung gewissermaßen künstlich herbeizuführen. Es ist beispielsweise ein Betriebszustand denkbar, bei welchem die in Fig. 1 nicht dargestellte Unterwalze des Kalanders 100 eine solche Hubkraft auf den Walzenstapel ausübt, dass in dem Walzspalt 9 eine Linienkraft herrscht, die gerade dem Gewicht der oberen Walze 10 entspricht. Dann ist das Wälzlager 4 nicht belastet und neigen seine Wälzkörper dazu, schleifend über ihre Wälzfläche mitgenommen zu werden. Da Kalander in der Papierindustrie mit hohen Geschwindigkeiten bis in den Bereich von 2000 m/min arbeiten, führt ein derartiges Schleifen zu einem erheblichen Reibungsverschleiß sowohl an den Abwälzflächen als auch an den Wälzkörpern, so daß ein solcher Betriebszustand unbedingt vermieden werden muß. Dies gelingt durch die Ausübung einer Kraft mittels der Stützelemente 20, die gerade die für eine rollende Mitnahme erforderliche Anlage der Wälzkörper in dem Wälzlager 4 erzeugt.

Mit der gezeigten Anordnung läßt sich aber auch noch eine Unterstützungsfunktion im quasi entgegengesetzten Belastungsfall erzeugen, wenn nämlich das Wälzlager 4 nicht entlastet ist, sondern gerade eine hohe Last zu ertragen hat, wenn durch eine entsprechende Andrückung des Walzenstapels von unten die Linienkraft in dem Walzspalt 9 über das bloße Gewicht der oberen Walze 10 hinaus gesteigert werden muß. Eine hohe radiale Belastung im Verein mit den bereits erwähnten hohen Geschwindigkeiten stellt für ein Wälzlager die maximale Belastung dar. Wenn mittels der Stützelemente 20 eine resultierende Gesamtkraft K erzeugt wird, die in Richtung auf den Walzspalt 9 wirkt, so kann die Anordnung der Stützelemente 20 dem Wälzlager 4 einen Teil seiner Belastung abnehmen, so daß das Wälzlager 4 im Hinblick auf die höchste Belastung schwächer dimensioniert sein kann oder aber eine längere Lebensdauer erhält.

Während die Walze 10 nach den Fig. 1 bis 3 eine im Walzenständer 3 fest gelagerte konventionelle Walze darstellt, ist in Fig. 4 eine durchbiegungssteuerbare Walze 30 angedeutet, bei der sich eine Hohlwalze 31 um ein sie der Länge nach durchgreifendes undrehbares Querhaupt 32 dreht und durch eine nur angedeutete, gegen den Innenumfang der Hohlwalze 31 wirkende hydraulische Stützeinrichtung 33 von innen abgestützt wird. An den Enden der Hohlwalze 31 sind Wälzlager 34 vorgesehen, mittels derer die Hohlwalze 31 auf dem Querhaupt 32 drehbar abgestützt wird. Axial außerhalb der Wälzlager 34 sind bei der Walze 30 Stützelemente 40 vorgesehen, die zweckmäßig an dem Querhaupt 32 feststehend angebracht sind und mit ihren Gleitschuhen gegen den Innenumfang der Hohlwalze 31 wirken. Hinsichtlich der Anordnung in Umfangsrichtung und der Ausbildung im einzelnen ähneln die Stützelemente 40 den Stützelementen 20. Auch mittels der Stützelemente 40 können die beiden Funktionen der Aufrechterhaltung einer Mindestbelastung der Wälzlagers 34 und der Unterstützung bei besonders hohen Belastungen ausgeübt werden.

## Patentansprüche

1. Walze (10), insbesondere Belastungswalze für Kalander (100),
mit einem zylindrischen Walzenkörper (1, 31), welcher an jedem Ende auf je einem Wälzlager (4, 34) in einem Walzenständer (3) oder einem damit verbundenen Teil (32) drehbar gelagert ist, wobei
unmittelbar neben dem jeweiligen Wälzlager (4, 34) auf mindestens einer Seite desselben - axial gesehen - eine Kraftausübungseinrichtung (20) vorgesehen ist, deren resultierende Kraft radial und in der Wirkebene (W) verläuft und die einerseits an dem Walzenkörper (1, 31), andererseits an dem Walzenständer (3) bzw. dem damit verbundenen Teil (32) angreift **dadurch gekennzeichnet, dass** die Kraft derart bemessen ist, dass die Linienkraft im Walzenspalt (9) nicht beeinflusst wird.

2. Walze nach Anspruch 1, **dadurch gekennzeichnet, daß** die Walze (30) eine durchbiegungssteuerbare Walze ist
mit einer zum Umlauf bestimmten, den arbeitenden Walzenumfang bildenden Hohlwalze (31),
mit einem diese der Länge nach durchgreifenden, ringsum Abstand zum Innenumfang der Hohlwalze (31) belassenden undrehbaren Querhaupt (32), welches an den Enden an äußeren Abstützungen abgestützt ist und auf welchem die Hohlwalze (31) an ihren Enden auf den Wälzlagern (34) abgestützt ist,
und mit einer zwischen den Wälzlagern (34,34) im Innern der Hohlwalze (31) angeordneten Stützeinrichtung (33), die sich einerseits am Querhaupt (32) abstützt und andererseits zur Erzeugung der von der Walze (30) auszuübenden Linienkraft gegen den Innenumfang der Hohlwalze (31) wirkt.

3. Walze nach Anspruch 1, **dadurch gekennzeichnet,**
**daß** die Walze (10) eine konventionelle Walze ist
mit einem zum Umlauf bestimmten, den arbeitenden Walzenumfang bildenden zylindrischen Walzenkörper (1), der an jedem Ende einen konzentrischen Walzenzapfen (2) aufweist und mittels der auf den Walzenzapfen (2) angeordneten Wälzlager (4,4) im Walzenständer (3) drehbar gelagert ist.

4. Walze nach einem der Ansprüche 1 bis 3, **dadurch gekennzeichnet, daß** die Kraftausübungseinrichtung hydraulisch betätigt ist.

5. Walze nach Anspruch 4, **dadurch gekennzeichnet, daß** die Kraftausübungseinrichtung mindestens ein radial gegen den Innenumfang der Hohlwalze (31) bzw. die umlaufende Zylinderfläche (6) der Walze (10) wirkendes hydrostatisches Stützelement (20 bzw. 40) aufweist.

6. Walze nach einem der Ansprüche 3 bis 5, **dadurch gekennzeichnet, daß** das Stützelement (20) am Innenumfang eines mit dem Walzenständer (3) verbundenen, den Walzenzapfen (2) umgebenden Ringgehäuses (42) angeordnet ist.

7. Walze nach Anspruch 5 oder 6, **dadurch gekennzeichnet, daß** die Kraftausübungseinrichtung mindestens ein Paar von zur Wirkebene (W) symmetrisch angeordneten gleichstarken Stützelementen (20,20) umfaßt.

8. Walze nach einem der Ansprüche 1 bis 7, **dadurch gekennzeichnet, daß** mittels der Kraftausübungseinrichtung eine in Richtung der Linienkraft wirkende resultierende Kraft (K) erzeugbar ist.

## Claims

1. Roll (10), in particular loading roll for calender (100), having a cylindrical roll body (1, 31), which at each end is mounted such that it can rotate on a roller bearing (4, 34) in a roll stand (3) or a part (32) connected thereto, there being provided immediately beside the respective roller bearing (4, 34), on at least one side of the same - seen axially - a force exerting device (20), whose resultant force runs radially and in the working plane (W) and which on one side acts on the roll body (1, 31) and on the other side on the roll stand (3) or the part (32) connected thereto, **characterized in that** the force is dimensioned such that the line force in the roll nip (9) is not affected.

2. Roll according to Claim 1, **characterized in that** the roll (30) is a controlled deflection roll, having a hollow roll (31) intended to revolve and forming the working roll circumference,
having a non-rotatable transverse beam (32) which reaches through the length of the hollow roll (31) and leaves a space all round from the inner circumference of the latter, which is supported at the ends on external supports and on which the hollow roll (31) is supported on the roller bearings (34) at its ends,
and having a supporting device (33) arranged in the interior of the hollow roll (31), between the roller bearings (34, 34), which is supported on one side on the transverse beam (32) and on the other side acts against the inner circumference of the hollow roll (31) in order to produce the line force to be exerted by the roll (30).

3. Roll according to Claim 1, **characterized in that** the roll (10) is a conventional roll,
having a cylindrical roll body (1) intended to rotate and forming the working roll circumference, which has a concentric roll journal (2) at each end and is mounted such that it can rotate in roll stands (3) by means of roller bearings (4, 4) arranged on the roll journals (2).

4. Roll according to one of Claims 1 to 3, **characterized in that** the force exerting device is actuated hydraulically.

5. Roll according to Claim 4, **characterized in that** the force exerting device has at least one hydrostatic supporting element (20 or 40) acting radially against the inner circumference of the hollow roll (31) or the revolving cylindrical surface (6) of the roll (10).

6. Roll according to one of Claims 3 to 5, **characterized in that** the supporting element (20) is arranged on the inner circumference of an annular housing (42) connected to the roll stand (3) and surrounding the roll journal (2).

7. Roll according to Claim 5 or 6, **characterized in that** the force exerting device comprises at least one pair of equally powerful supporting elements (20, 20) arranged symmetrically with respect to the working plane (W).

8. Roll according to one of Claims 1 to 7, **characterized in that**, by means of the force exerting device, a resultant force (K) acting in the direction of the line force can be produced.

## Revendications

1. Cylindre (10), notamment cylindre de charge pour une calandre (100), comportant un corps cylindrique (1, 31) de cylindre dont chaque extrémité est montée à rotation par un palier de roulement (4, 34) dans un bâti de palier (3) ou une pièce (32) reliée à celui-ci,
directement à côté de chaque palier à roulement (4, 34) sur au moins un côté de celui-ci (vu dans la direction axiale), il est prévu une installation pour exercer une force (20) dont la force résultante est dirigée radialement dans le plan d'action (W) et cette force d'applique, d'une part, contre le corps de' cylindre (1, 31) et d'autre part, contre le bâti de cylindre (3) ou la pièce (32) reliée à celui-ci,
**caractérisé en ce que**
la force est dimensionnée pour ne pas influencer la force linéaire dans l'intervalle (9) des cylindres.

2. Cylindre selon la revendication 1,
**caractérisé en ce que**
- le cylindre (30) est un cylindre à flexion commandée, comprenant un cylindre creux (31) destiné à tourner et constituant la périphérie active du cylindre,
- une traverse (32), non rotative, traversant le cylindre creux (31) dans sa longueur en laissant tout autour un intervalle par rapport à la périphérie intérieure du cylindre creux, et cette traverse est soutenue aux extrémités par des appuis extérieurs, soutenant elle-même le cylindre creux (31) au niveau des extrémités, par les paliers à roulement (34), et
- une installation de support (33) entre les paliers de roulement ((34) à l'intérieur du cylindre creux (31), cette installation de support s'appuyant d'un côté contre la traverse (32) et de l'autre, contre la périphérie intérieure du cylindre creux (31) pour créer la force linéaire exercée par le cylindre (30).

3. Cylindre selon la revendication 1,
**caractérisé en ce que**
le cylindre (10) est un cylindre conventionnel ayant
un corps de cylindre (1), cylindrique, destiné à tourner et constituant la surface active du cylindre, ce corps de cylindre ayant à chaque extrémité, un tourillon de cylindre (2), concentrique, par lesquels les paliers de roulement (4, 4') installés sur les tourillons de cylindre (2), sont montés à rotation dans le bâti de cylindre (3).

4. Cylindre selon l'une des revendications 1 à 3,
**caractérisé en ce que**
l'installation de transmission de force est à actionnement hydraulique.

5. Cylindre selon la revendication 4,
**caractérisé en ce que**
la station de transmission de force comporte au moins un élément de support hydrostatique (20, 40) agissant radialement contre la périphérie intérieure du cylindre creux (31) ou la surface cylindrique tournant (6) du cylindre (10).

6. Cylindre selon l'une des revendications 3 à 5,
**caractérisé en ce que**
l'élément de support (30) est prévu sur la périphérie intérieure d'un boîtier annulaire (42) relié au bâti de cylindre (3), entourant le tourillon de cylindre (2).

7. Cylindre selon la revendication 5 ou 6,
**caractérisé en ce que**
la station de transmission de force comprend au moins une paire d'éléments de support (20) de même puissance, disposés symétriquement par rapport au plan d'action (W).

8. Cylindre selon une des revendications 1 à 7,
**caractérisé en ce que**
l'installation engendrant la force crée une force résultante agissant dans la direction de la force linéaire.
